# FASCICULE DE BREVET EUROPEEN

(11) **EP 1 916 182 B1**
(45) Date de publication et mention de la délivrance du brevet: **27.01.2010**
(21) Numéro de dépôt: 07291094.6
(22) Date de dépôt: 12.09.2007
(51) Int. Cl.: B62K 21/06, F16B 21/12

(54) **Jeu de direction de cycle**
Fahrrad-Steuerkopflager
Cycle steering play

(30) Priorité: 26.10.2006 FR 0609430
(43) Date de publication de la demande: 30.04.2008
(73) Titulaire: Look Cycle International, 58000 Nevers (FR)
(72) Inventeur: Bouchez, Julien, 45220 Saint Germain des Pres (FR)
(74) Mandataire: Laget, Jean-Loup

(56) Documents cités:
- EP-A1- 0 541 070
- US-A- 5 297 811

## Description

La présente invention est relative à un jeu de direction de cycle.

Le jeu de direction de cycle est utilisé pour relier un tube pivot de fourche à un tube de direction faisant partie d'un cadre de cycle.

Dans ce but, tout jeu de direction comprend un roulement inférieur et un roulement supérieur qui créent une liaison permettant la rotation du tube pivot par rapport au tube de direction. Il comporte également des moyens de serrage axial des roulements inférieur et supérieur contre une extrémité inférieure respectivement supérieure du tube de direction.

Le document EP 0 541 070 A décrit un jeu de direction de cycle selon le préambule de la revendication 1.

Les moyens de serrage axial des roulements inférieur et supérieur sur les jeux de direction classiques comportent généralement un bouchon situé au sommet du tube de fourche et prenant appui à l'intérieur de celui-ci par un expandeur.

Un problème qui se pose dans les jeux de direction connus est le rattrapage de jeu des roulements et de maintien axial de la potence sur le tube pivot de fourche. Ce problème est en général résolu par l'utilisation d'un certain nombre d'entretoises permettant d'obtenir la hauteur souhaitée et d'assurer le serrage des roulements.

Cependant, les jeux de direction connus comportent un grand nombre de pièces et ils sont tous relativement complexes à l'assemblage, aussi bien lors de la fabrication que lors d'un réglage ultérieur effectué par le cycliste lui-même, ce qui entraîne nécessairement l'ajustage autrement inutile des roulements.

Le but de l'invention est de remédier à ces inconvénients en proposant un jeu de direction dont l'assemblage est extrêmement simple tout en assurant le serrage fiable des roulements inférieur et supérieur. Le jeu de direction selon l'invention permet en outre d'amortir ou à tout le moins affaiblir les vibrations provenant de la roue avant et qui dans les jeux de direction connus sont retransmises au cadre pratiquement sans atténuation. La durée de vie des roulements se trouve de cette manière augmentée.

L'objet de l'invention est un jeu de direction de cycle apte à relier un tube pivot de fourche à un tube de direction faisant partie d'un cadre de cycle, comprenant un roulement inférieur, un roulement supérieur de manière à permettre la rotation du tube pivot par rapport au tube de direction, et des moyens de serrage axial des roulements inférieur et supérieur contre une extrémité inférieure respectivement supérieure du tube de direction, caractérisé par le fait que lesdits moyens de serrage axial comportent un premier organe de serrage axial constitué par une rainure circulaire prévue sur la face extérieure du tube pivot et apte à coopérer avec un deuxième organe de serrage axial constitué par une nervure de forme sensiblement complémentaire prévue sur un élément annulaire élastiquement déformable dans un sens perpendiculaire à l'axe du tube pivot et disposé au-dessus du roulement supérieur de manière à exercer une poussée contre celui-ci.

Selon d'autres caractéristiques de l'invention :
- ledit élément annulaire est fendu ;
- ledit élément annulaire présente la forme d'un anneau dont la périphérie intérieure constitue ladite nervure ;
- ledit anneau présente une section circulaire ;
- lesdits moyens de serrage axial comportent en outre un anneau compressible intercalé entre le roulement supérieur et une portée formée par un épaulement intérieur dans le tube de direction ;
- ledit élément annulaire élastiquement déformable appuie directement sur le roulement supérieur ;
- ledit élément annulaire élastiquement déformable appuie sur le roulement supérieur par l'intermédiaire d'un couvercle annulaire ;
- une pièce intercalaire annulaire en un matériau élastique est disposée entre ledit couvercle et le roulement supérieur ;
- ladite pièce intercalaire présente une paroi inférieure à épaisseur réduite s'étendant dans un interstice défini entre la périphérie extérieure du tube pivot et le roulement supérieur ;
- un anneau compressible supplémentaire est disposé entre le roulement inférieur et une portée formée par un épaulement dans un logement du tube de direction ;
- dans le jeu de direction, la partie inférieure du tube pivot présente une surface à section oblique constituant une portée extérieure pour le roulement inférieur, et dans lequel un élément intercalaire annulaire en matériau élastique présentant une partie à section oblique est disposée entre le roulement inférieur et ladite surface à section oblique ;
- ledit élément intercalaire annulaire présente en outre une partie cylindrique supérieure s'étendant dans un interstice défini entre la périphérie extérieure du tube pivot et le roulement inférieur ;
- ledit élément annulaire élastiquement déformable comporte une branche s'étendant verticalement vers le haut de manière à former un organe de fixation d'une potence sur le tube pivot ;
- le tube pivot comporte sur une partie de sa longueur à son extrémité haute un méplat de manière à être solidaire en rotation avec la potence lorsque le tube pivot est inséré dans un logement de forme complémentaire prévu dans la partie centrale de la potence et débouchant sur la face inférieure de celle-ci ;
- ledit élément annulaire élastiquement déformable présente la forme d'une douille fendue sur la périphérie intérieure de laquelle ladite nervure est prévue, et qui sur sa périphérie extérieure est pourvue d'un filetage coopérant avec un écrou apte à être serré contre le roulement supérieur ;
- ledit écrou appuie contre le roulement supérieur par l'intermédiaire d'une bague élastique ;
- le tube pivot comporte plusieurs rainures circulaires permettant d'adapter le tube pivot à des tubes de direction de longueurs différentes.

D'autres caractéristiques et avantages de l'invention ressortiront de la description qui va suivre de plusieurs modes de réalisation non limitatifs de l'invention, en référence aux figures annexées dans lesquelles :
- la figure 1 est une vue en coupe longitudinale d'un jeu de direction assemblé, selon un premier mode de réalisation de l'invention ;
- la figure 2 est une vue éclatée des éléments de la figure 1, avant assemblage;
- la figure 3 est une vue en perspective en plus grande échelle de la partie supérieure du jeu de direction des figures 1 et 2 ;
- la figure 4 est une vue éclatée en perspective illustrant schématiquement une variante du premier mode de réalisation de l'invention permettant en plus la fixation de la potence ;
- la figure 5 est une vue en coupe longitudinale d'un jeu de direction assemblé, selon un deuxième mode de réalisation de l'invention;
- la figure 6 est une vue éclatée des éléments de la figure 5, avant assemblage;
- la figure 7 est une vue schématique partielle en coupe longitudinale d'un jeu de direction selon un troisième mode de réalisation de l'invention.

Seuls les éléments qui se rapportent directement à l'invention sont représentés sur les figures dans lesquels les éléments identiques ou équivalents portent les mêmes signes de référence.

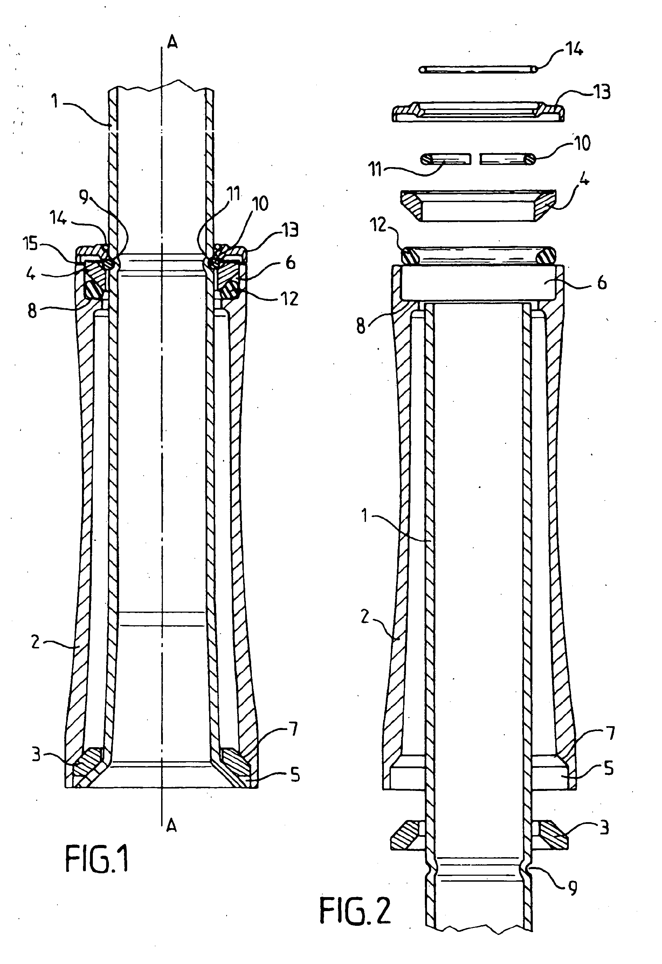

Un premier mode de réalisation sera maintenant décrit en référence aux figures 1 à 3.

Le jeu de direction sert à relier un tube pivot de fourche 1 à un tube de direction 2 faisant partie d'un cadre de cycle (non représenté). Le jeu de direction 2 comprend un roulement inférieur 3 et un roulement supérieur 4 disposés à l'extrémité inférieure respectivement supérieure du tube de direction 2 de manière à constituer une liaison à rotation entre ces deux tubes.

Les roulements inférieur et supérieur 3, 4 sont reçus dans un logement inférieur 5 respectivement un logement supérieur 6 qui sont délimités par un épaulement annulaire respectif 7, 8. Dans l'exemple illustré, le premier épaulement 7 forme une portée inclinée et le deuxième épaulement 8 forme une portée d'extension radiale.

Afin d'éliminer le débattement axial des roulements inférieur et supérieur 3, 4, le jeu de direction comporte des moyens de serrage axial des roulements.

Selon une caractéristique importante de l'invention, ces moyens de serrage axial comportent un premier organe de serrage axial constitué par une rainure circulaire 9 prévue sur la face extérieure de tube pivot 1, et un deuxième organe de serrage axial constitué par une nervure 10 prévue sur un élément annulaire 11 disposé au-dessus du roulement supérieur 4 en appuyant sur celui-ci, de manière directe ou indirecte comme cela sera expliqué par la suite.

Selon l'invention, l'élément annulaire 11 est élastiquement déformable dans un sens perpendiculaire à l'axe A-A du tube pivot. Il peut être en un matériau métallique ou en un polymère présentant l'élasticité souhaitée.

La rainure 9 présente une forme sensiblement complémentaire à celle de la nervure. Avantageusement, le diamètre intérieur de la nervure 10 est légèrement réduit par rapport à celui de la rainure 9 de sorte que la nervure puisse être reçue dans la rainure par encliquetage.

Selon une autre caractéristique de l'invention, l'élément annulaire est fendu afin de s'ouvrir élastiquement lors de l'assemblage.

Dans le mode de réalisation montré sur les figures 1 à 3, l'élément annulaire 11 a la forme d'un anneau, de préférence à section annulaire.

La position en hauteur de la rainure 9 sur le tube pivot est adaptée à la position du roulement supérieur 4 pour que l'élément annulaire 11 exerce une poussée contre le roulement supérieur 4 vers le bas, ce qui a également pour conséquence que le roulement inférieur 3 est tiré vers le haut à cause de la forme évasée de l'extrémité inférieure du tube pivot 1 qui vient en butée contre le roulement inférieur 3 lorsque le tube pivot 1 est déplacé vers le haut à l'intérieur du tube de direction 2.

Selon une autre caractéristique de l'invention, les moyens de serrage axial comportent en outre un anneau compressible 12 intercalé entre le roulement supérieur 4 et la portée formée par l'épaulement 8 du logement supérieur 6.

L'anneau compressible 12 est comprimé lors de l'assemblage du jeu de direction et reste dans cet état comprimé pour faire fonction de moyen de rattrapage du débattement des roulements inférieur et supérieur 3, 4 et de moyen amortisseur en atténuant les vibrations en provenance de la roue avant (non illustrée).

De préférence, la face inférieure du roulement supérieur 4 est oblique de manière à comprimer l'anneau compressible 12 en direction de l'angle formé par l'épaulement 8 et la paroi verticale du logement 6.

Le jeu de direction est de manière classique fermé vers le haut par un couvercle annulaire 13 qui protège le roulement supérieur 4 en étant complété vers le haut par une joint d'étanchéité 14 en appui contre sa face supérieure autour du trou défini par le couvercle. Le couvercle 13 présente en coupe la forme d'un C dont une extrémité intérieure est en appui contre la partie supérieure de l'élément annulaire 11 tandis que l'extrémité extérieure définit un interstice 15 par rapport à l'extrémité supérieure du tube de direction 2 pour ne pas gêner la rotation du tube de pivot 1.

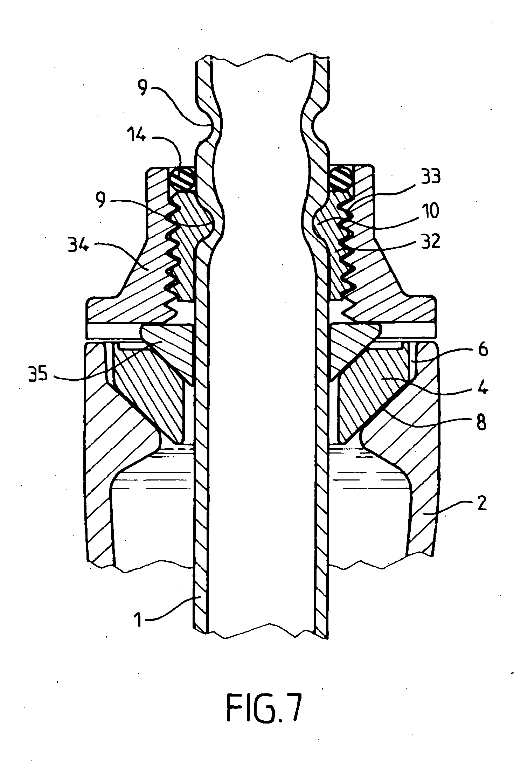

Le tube pivot 1 peut par ailleurs comporter plusieurs rainures circulaires 9 (voir figure 7) permettant d'adapter le tube pivot à des tubes de direction à longueurs différentes correspondant à des cadres de tailles différentes.

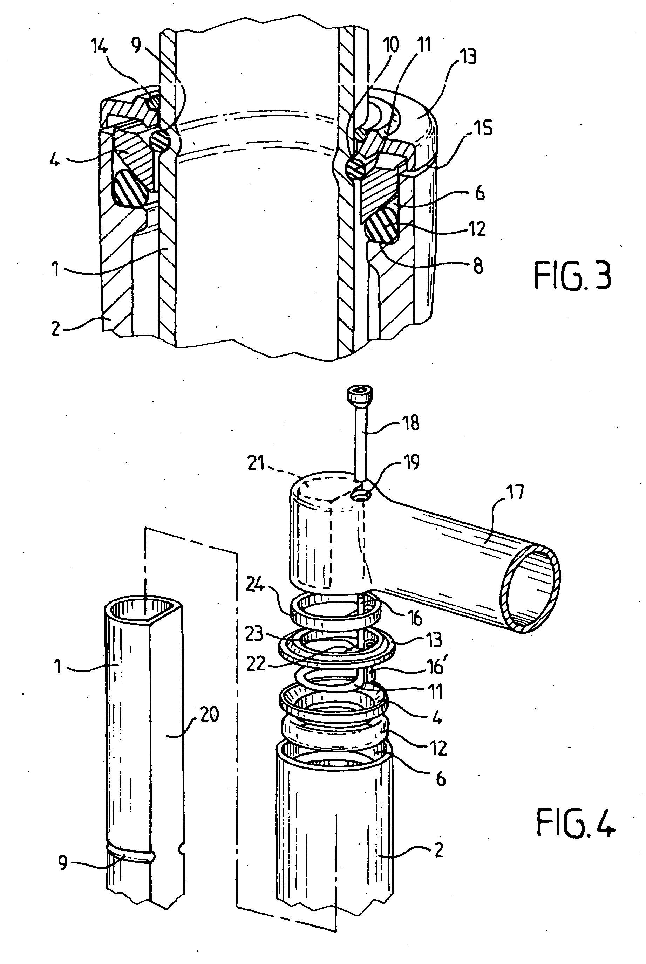

La figure 4 montre une variante du mode de réalisation décrit en référence aux figures 1 à 3. Dans cette variante, le deuxième organe de serrage formé par l'élément annulaire 11 comporte une branche 16 s'étendant verticalement vers le haut de manière à former un organe de fixation d'une potence 17 sur le tube pivot 1. Cet organe de fixation comporte un filetage (non représenté) apte à coopérer avec une tige taraudée 18 formant écrou.

La tige taraudée s'étend à travers un trou 19 dans la partie centrale de la potence 17 pour être vissée sur la branche filetée 16 de l'élément annulaire pour ainsi fixer la potence.

Le tube pivot 1 comporte sur une partie de sa longueur à son extrémité haute un méplat 20 de manière à le rendre solidaire en rotation avec la potence 17 lorsque le tube pivot 1 est inséré dans un logement 21 de forme complémentaire prévu dans la partie centrale de la potence et débouchant sur la face inférieure de celle-ci. Ce logement 21 est indiqué en tireté à la figure 4.

Cette forme à l'extrémité haute du tube pivot 1 est également reprise, de manière complémentaire, dans le couvercle annulaire 13 qui ici comporte un segment de voile 22 pourvu d'un trou 23 pour le passage de la branche 16 de l'élément annulaire 11 qui peut par ailleurs comporter une deuxième branche 16' qui s'étend verticalement parallèlement à la première branche 16 par un trou correspondant dans le segment de voile 22.

Dans l'exemple illustré à la figure 4, le jeu de direction comporte une entretoise annulaire 24 disposée entre le couvercle 13 et la face inférieure de la potence 17. Cette entretoise 24 peut également, comme montré à la figure 4, être pourvue d'un segment de voile percé par un ou deux trous de passage pour la ou les branches 16, 16' de l'élément annulaire 11.

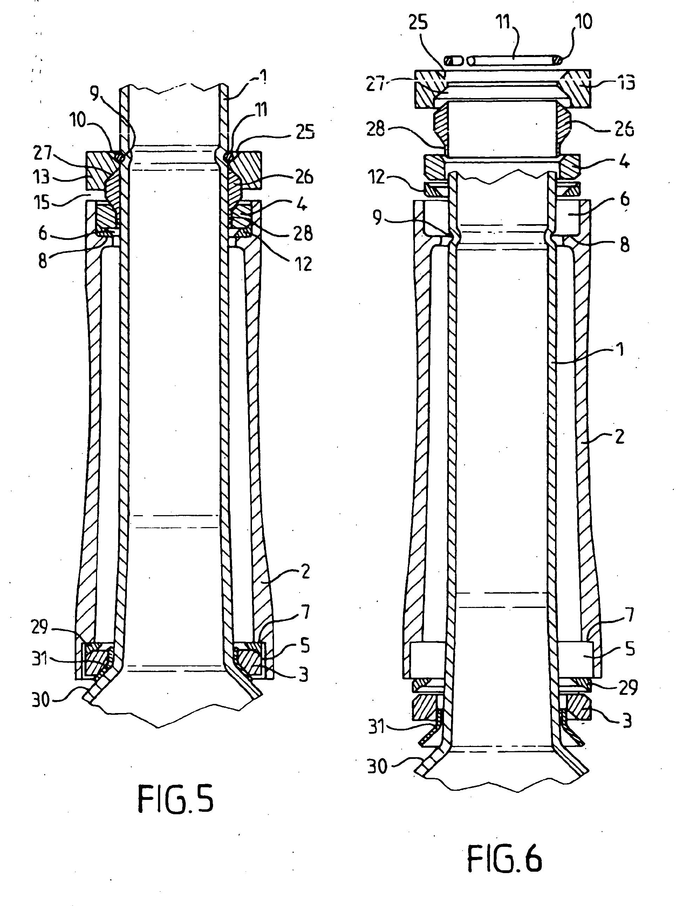

Les figures 5 et 6 montrent un deuxième mode de réalisation de l'invention dans lequel le deuxième organe de serrage sous forme d'un élément annulaire 11 est disposé dans une gorge effectuée sur la face supérieure ou extérieure d'un couvercle annulaire 13. L'élément annulaire 11 appuie ainsi contre le roulement supérieur par l'intermédiaire de ce couvercle 13.

Afin de mieux absorber les vibrations, une pièce intercalaire annulaire 26 en un matériau élastique est de préférence disposée entre le couvercle 13 et le roulement supérieur 4.

La partie supérieure de la pièce intercalaire 26 est reçue dans un logement 27 prévu sur la face inférieure du couvercle 13.

La pièce intercalaire 26 présente avantageusement une paroi inférieure 28 à épaisseur réduite s'étendant dans un interstice défini entre la périphérie extérieure du tube pivot 1 et le roulement supérieur 4 de manière à éliminer tout jeu radial de celui-ci.

Dans l'exemple illustré sur les figures 5 et 6, l'épaulement inférieur 7 du tube de direction 2 s'étend radialement pour définir le logement inférieur 5 qui reçoit des moyens supplémentaires destinés à améliorer davantage l'amortissement des vibrations. Ces moyens comportent un anneau compressible complémentaire 29 disposé entre le roulement inférieur 3 et la portée formée par l'épaulement 7 du logement 5 dans le tube de direction 2.

La partie inférieure du tube pivot présente une surface à section oblique 30 constituant une portée extérieure pour le roulement inférieur 3. Selon l'invention, un élément intercalaire annulaire 31 en un matériau élastique présentant une partie à section oblique est disposée entre le roulement inférieur et la surface oblique 30.

Cet élément intercalaire annulaire 31 présente avantageusement en outre une partie cylindrique supérieur s'étendant dans un interstice défini entre la périphérie extérieure du tube pivot 1 et le roulement inférieur 3.

La figure 7 montre un troisième mode de réalisation d'un jeu de direction selon l'invention. Ici, le deuxième organe de serrage axial sous forme d'un élément annulaire élastiquement déformable dans un sens perpendiculaire à l'axe A-A du tube de pivot 1 présente la forme d'une douille 32 sur la périphérie intérieure de laquelle une nervure 10 est prévue pour coopérer avec une parmi plusieurs rainures circulaires 9 prévues sur le tube pivot 1. De préférence, cette douille 32 est fendue.

La douille 32 est sur sa périphérie extérieure pourvue d'un filetage 33 coopérant avec un écrou 34 apte à être serré contre le roulement supérieur 4.

De préférence, l'écrou appuie contre le roulement supérieur 4 par l'intermédiaire d'un anneau élastique 35 qui peut être fendu ou non.

Bien entendu, l'invention n'est pas limitée aux exemples illustrés et décrits ; l'homme du métier peut aisément combiner les différentes caractéristiques pour arriver à d'autres variantes sans pour autant sortir du cadre de l'invention.

## Revendications

1. Jeu de direction de cycle apte à relier un tube pivot de fourche (1) à un tube de direction (2) faisant partie d'un cadre de cycle, comprenant un roulement inférieur (3), un roulement supérieur (4) de manière à permettre la rotation du tube pivot (1) par rapport au tube de direction (2), et des moyens de serrage axial (9, 10) des roulements inférieur et supérieur (3, 4) contre une extrémité inférieure respectivement supérieure du tube de direction (2), **caractérisé par le fait que** lesdits moyens de serrage axial comportent un premier organe de serrage axial constitué par une rainure circulaire (9) prévue sur la face extérieure du tube pivot (1) et apte à coopérer avec un deuxième organe de serrage axial constitué par une nervure (10) de forme sensiblement complémentaire prévue sur un élément annulaire élastiquement déformable (11 ; 32) dans un sens perpendiculaire à l'axe du tube pivot et disposé au-dessus du roulement supérieur (4) de manière à exercer une poussée contre celui-ci.

2. Jeu de direction selon la revendication 1, **caractérisé par le fait que** ledit élément annulaire (11 ; 32) est fendu.

3. Jeu de direction selon la revendication 1 ou 2, **caractérisé par le fait que** ledit élément annulaire présente la forme d'un anneau (11) dont la périphérie intérieure constitue ladite nervure (10).

4. Jeu de direction selon la revendication 3, **caractérisé par le fait que** ledit anneau (11) présente une section circulaire.

5. Jeu de direction selon l'une quelconque des revendications précédentes, **caractérisé par le fait que** lesdits moyens de serrage axial (9, 10) comportent en outre un anneau compressible (12) intercalé entre le roulement supérieur (4) et une portée formée par un épaulement intérieur (8) dans le tube de direction (2).

6. Jeu de direction selon l'une quelconque des revendications précédentes, **caractérisé par le fait que** ledit élément annulaire élastiquement déformable (11) appuie directement sur le roulement supérieur (4).

7. Jeu de direction selon l'une quelconque des revendications 1 à 5, **caractérisé par le fait que** ledit élément annulaire élastiquement déformable (11) appuie sur le roulement supérieur (4) par l'intermédiaire d'un couvercle annulaire (13).

8. Jeu de direction selon la revendication 7, **caractérisé par le fait qu'**une pièce intercalaire annulaire (26) en un matériau élastique est disposée entre ledit couvercle (13) et le roulement supérieur (4).

9. Jeu de direction selon la revendication 8, **caractérisé par le fait que** ladite pièce intercalaire (26) présente une paroi inférieure à épaisseur réduite s'étendant dans un interstice défini entre la périphérie extérieure du tube pivot (1) et le roulement supérieur (4).

10. Jeu de direction selon l'une quelconque des revendications précédentes, **caractérisé par le fait qu'**un anneau supplémentaire compressible (29) est disposé entre le roulement inférieur (3) et une portée formée par un épaulement (7) dans un logement (5) du tube de direction (2).

11. Jeu de direction selon l'une quelconque des revendications précédentes, dans lequel la partie inférieure du tube pivot (1) présente une surface à section oblique (30) constituant une portée extérieure pour le roulement inférieur (3), **caractérisé par le fait qu'**un élément intercalaire annulaire (31) en matériau élastique présentant une partie à section oblique est disposée entre le roulement inférieur (3) et ladite surface à section oblique (30).

12. Jeu de direction selon la revendication 11, **caractérisé par le fait que** ledit élément intercalaire annulaire (31) présente en outre une partie supérieure cylindrique s'étendant dans un interstice défini entre la périphérie extérieure du tube pivot (1) et le roulement inférieur (3).

13. Jeu de direction selon l'une quelconque des revendications 2 à 6 et 10 à 12, **caractérisé par le fait que** ledit élément annulaire élastiquement déformable (11) comporte une branche (16) s'étendant verticalement vers le haut de manière à former un organe de fixation d'une potence (17) sur le tube pivot (1).

14. Jeu.de direction selon la revendication 13, **caractérisé par le fait que** le tube pivot (1) comporte sur une partie de sa longueur à son extrémité haute un méplat (20) de manière à être solidaire en rotation avec la potence (17) lorsque le tube pivot (1) est inséré dans un logement (21) de forme complémentaire prévu dans la partie centrale de la potence (17) et débouchant sur la face inférieure de celle-ci.

15. Jeu de direction selon l'une quelconque des revendications 1 et 2, 5 ou 11, **caractérisé par le fait que** ledit élément annulaire élastiquement déformable présente la forme d'une douille fendue (32) sur la périphérie intérieure de laquelle ladite nervure (10) est prévue, et qui sur sa périphérie extérieure est pourvue d'un filetage (33) coopérant avec un écrou (34) apte à être serré contre le roulement supérieur (4).

16. Jeu de direction selon la revendication 15, **caractérisé par le fait que** ledit écrou (34) appuie contre le roulement supérieur (4) par l'intermédiaire d'une bague élastique (35).

17. Jeu de direction selon l'une quelconque des revendications précédentes, **caractérisé par le fait que** le tube pivot (1) comporte plusieurs rainures circulaires (9) permettant d'adapter le tube pivot (1) à des tubes de direction (2) à longueurs différentes.

## Claims

1. Cycle steering headset capable of connecting a fork pivot tube (1) to a steering tube (2) forming part of a cycle frame, comprising a lower bearing (3) and an upper bearing (4) so as to permit the rotation of the pivot tube (1) relative to the steering tube (2) and means (9, 10) for axially clamping the lower and upper bearings (3, 4) against a lower, respectively upper, end of the steering tube (2), **characterised in that** said means for axial clamping comprise a first axial clamping member consisting of a circular groove (9) provided on the external face of the pivot tube (1) and capable of cooperating with a second axial clamping member consisting of a rib (10) of substantially complementary shape, provided on a resiliently deformable annular element (11; 32) in a direction perpendicular to the axis of the pivot tube and arranged above the upper bearing (4) so as to exert a thrust against said upper bearing.

2. Steering headset according to Claim 1, **characterised in that** said annular element (11; 32) is split.

3. Steering headset according to Claim 1 or 2, **characterised in that** said annular element has the shape of a ring (11) of which the internal periphery constitutes said rib (10).

4. Steering headset according to Claim 3, **characterised in that** said ring (11) has a circular cross-section.

5. Steering headset according to any one of the preceding claims, **characterised in that** said means (9, 10) for axial clamping further comprise a compressible ring (12) inserted between the upper bearing (4) and a bearing surface formed by an internal shoulder (8) in the steering tube (2).

6. Steering headset according to any one of the preceding claims, **characterised in that** said resiliently deformable annular element (11) bears directly against the upper bearing (4).

7. Steering headset according to any one of Claims 1 to 5, **characterised in that** said resiliently deformable annular element (11) bears against the upper bearing (4) by means of an annular cover (13).

8. Steering headset according to Claim 7, **characterised in that** an annular insert (26) made of a resilient material is arranged between said cover (13) and the upper bearing (4).

9. Steering headset according to Claim 8, **characterised in that** said insert (26) has a lower wall of reduced thickness extending into a gap defined between the external periphery of the pivot tube (1) and the upper bearing (4).

10. Steering headset according to any one of the preceding claims, **characterised in that** an additional compressible ring (29) is arranged between the lower bearing (3) and a bearing surface formed by a shoulder (7) in a housing (5) of the steering tube (2).

11. Steering headset according to any one of the preceding claims, in which the lower part of the pivot tube (1) has a surface of oblique cross-section (30) forming an external bearing surface for the lower bearing (3), **characterised in that** an annular insert (31) made of resilient material having a portion of oblique cross-section is arranged between the lower bearing (3) and said surface of oblique cross-section (30).

12. Steering headset according to Claim 11, **characterised in that** said annular insert (31) further comprises an upper cylindrical part extending into a gap defined between the external periphery of the pivot tube (1) and the lower bearing (3).

13. Steering headset according to any one of Claims 2 to 6, and 10 to 12, **characterised in that** said resiliently deformable annular element (11) comprises a branch (16) extending vertically upwards so as to form a member for fixing a handlebar stem (17) to the pivot tube (1).

14. Steering headset according to Claim 13, **characterised in that** the pivot tube (1) comprises on one part of its length at its upper end a flat surface (20) so as to be fixed in terms of rotation to the handlebar stem (17) when the pivot tube (1) is inserted into a housing (21) of complementary shape, provided in the central part of the handlebar stem (17) and opening into the lower face thereof.

15. Steering headset according to any one of Claims 1 and 2, 5 or 11, **characterised in that** said resiliently deformable annular element takes the form of a split bushing (32), on the internal periphery of which said rib (10) is provided and which is provided on its external periphery with a threaded portion (33) cooperating with a nut (34) which is capable of being tightened against the upper bearing (4).

16. Steering headset according to Claim 15, **characterised in that** said nut (34) bears against the upper bearing (4) by means of a resilient ring (35).

17. Steering headset according to any one of the preceding claims, **characterised in that** the pivot tube (1) comprises a plurality of circular grooves (9) making it possible to adapt the pivot tube (1) to steering tubes (2) of different lengths.

## Patentansprüche

1. Fahrrad-Steuerkopflager zum Anschluß eines Gabelschaft-Drehzapfens (1) an ein Steuerkopfrohr (2), das Teil eines Fahrradrahmens ist, mit einem unteren Wälzlager (3), einem oberen Wälzlager (4), derart, um die Drehung des Drehzapfens (1) relativ zum Steuerkopfrohr (2) zu gestatten, und mit Mitteln (9, 10) zum axialen Verspannen von oberem und unterem Wälzlager (3, 4) gegen ein unteres bzw. oberes Ende des Steuerkopfrohres (2), **dadurch gekennzeichnet, daß** die Mittel zum axialen Verspannen ein erstes axiales Spannorgan aufweisen, das von einer Ringnut (9) gebildet wird, die in der Außenfläche des Drehzapfens (1) vorgesehen ist und dazu dient, mit einem zweiten axialen Spannorgan zusammenzuwirken, das seinerseits aus einer Rippe (10) einer im wesentlichen komplementären Form besteht, die auf einem senkrecht zur Achse des Drehzapfens elastisch deformierbaren Ringelement (11; 32) vorgesehen und oberhalb des oberen Wälzlagers (4) so angebracht ist, daß es einen Druck gegen dieses ausübt.

2. Steuerkopflager nach Anspruch 1, **dadurch gekennzeichnet, daß** das Ringelement (11; 32) geschlitzt ist.

3. Steuerkopflager nach Anspruch 1 oder 2, **dadurch gekennzeichnet, daß** das Ringelement die Form eines Ringes (11) aufweist, dessen innere Umfangsfläche die Rippe (10) bildet.

4. Steuerkopflager nach Anspruch 3, **dadurch gekennzeichnet, daß** der Ring (11) einen kreisförmigen Querschnitt aufweist.

5. Steuerkopflager nach einem der vorangegangenen Ansprüche, **dadurch gekennzeichnet, daß** die Mittel (9, 10) zum axialen Verspannen außerdem einen kompressiblen Ring (12) umfassen, der zwischen dem oberen Wälzlager (4) und einem Anschlag zwischengeschaltet und von einer Innenschulter (8) im Steuerkopfrohr (2) gebildet ist.

6. Steuerkopflager nach einem der vorangehenden Ansprüche, **dadurch gekennzeichnet, daß** das elastisch deformierbare Ringelement (11) direkt am oberen Wälzlager (4) anliegt.

7. Steuerkopflager nach einem der Ansprüche 1 bis 5, **dadurch gekennzeichnet, daß** das elastische deformierbare Ringelement (11) auf das obere Wälzlager (4) unter Zwischenschaltung eines Ringdeckels (13) drückt.

8. Steuerkopflager nach Anspruch 7, **dadurch gekennzeichnet, daß** ein ringförmiges Zwischenstück (26) aus einem elastischen Material zwischen dem Deckel (13) und dem oberen Lager (4) angebracht ist.

9. Steuerkopflager nach Anspruch 8, **dadurch gekennzeichnet, daß** das Zwischenstück (26) eine untere Wand mit geringerer Dicke umfaßt, die in einem Zwischenraum zwischen der äußeren Umfangswand des Drehzapfens (1) und dem oberen Lager (4) verläuft.

10. Steuerkopflager nach einem der vorangegangenen Ansprüche, **dadurch gekennzeichnet, daß** ein kompressibler Zusatzring (29) zwischen dem unteren Lager (3) und einem Anschlag vorgesehen ist, der von einer Schulter (7) in einer Ausnehmung (5) des Steuerkopfrohres (2) gebildet wird.

11. Steuerkopflager nach einem der vorangegangenen Ansprüche, bei dem der untere Abschnitt des Drehzapfens (1) eine im Querschnitt schräg verlaufende Fläche (30) aufweist, die eine äußere Stützfläche für das untere Lager (3) bildet, **dadurch gekennzeichnet, daß** ein Zwischenringelement (31) aus elastischem Werkstoff, das einen im Querschnitt schräg verlaufenden Abschnitt umfaßt, zwischen dem unteren Lager (3) und der im Querschnitt schräg verlaufenden Fläche (30) angebracht ist.

12. Steuerkopflager nach Anspruch 11, **dadurch gekennzeichnet, daß** das Zwischenringelement (31) außerdem einen oberen zylindrischen Abschnitt aufweist, der in einem Zwischenraum verläuft, welcher zwischen der äußeren Umfangsfläche des Drehzapfens (1) und dem unteren Lager (3) festgelegt ist.

13. Steuerkopflager nach einem der Ansprüche 2 bis 6 und 10 bis 12, **dadurch gekennzeichnet, daß** das elastisch deformierbare Ringelement (11) einen Stab (16) umfaßt, der vertikal so nach oben verläuft, daß er ein Befestigungsorgan für einen Arm (17) auf dem Drehzapfen (1) bildet.

14. Steuerkopflager nach Anspruch 13, **dadurch gekennzeichnet, daß** der Drehzapfen (1) auf einem Abschnitt seiner Länge an seinem oberen Ende eine Abflachung (20) derart aufweist, daß er mit dem Arm (17) drehfest verbunden ist, wenn der Drehzapfen (1) in eine Ausnehmung (21) komplementärer Form eingesteckt ist, die im zentralen Abschnitt des Armes (17) vorgesehen ist und auf der unteren Seite desselben einmündet.

15. Steuerkopflager nach einem der Ansprüche 1 und 2, 5 oder 11, **dadurch gekennzeichnet, daß** das elastisch deformierbare Ringelement die Form einer geschlitzten Hülse (32) aufweist, auf deren Innenumfangsfläche die Rippe (10) vorgesehen und die auf ihrer Außenumfangsfläche mit einem Gewinde (33) versehen ist, das mit einer Mutter (34) zusammenwirkt, die gegen das obere Lager (4) verspannt werden kann.

16. Steuerkopflager nach Anspruch 15, **dadurch gekennzeichnet, daß** die Mutter (34) gegen das obere Lager (4) unter Zwischenschaltung eines elastischen Ringes (35) andrückt.

17. Steuerkopflager nach einem der vorhergehenden Ansprüche, **dadurch gekennzeichnet, daß** der Drehzapfen (1) mehrere Ringnuten (9) aufweist, die es gestatten, den Drehzapfen (1) an Steuerkopfrohre (2) unterschiedlicher Längen anzupassen.
